# EUROPEAN PATENT APPLICATION

(11) **EP 3 929 678 A1**
(43) Date of publication of application: **29.12.2021**
(21) Application number: 20759419.3
(22) Date of filing: 03.02.2020
(51) Int. Cl.: G05B 19/4093, G05B 19/4097, G05B 19/4155, B23Q 15/00

(54) **TOOL SELECTION METHOD, DEVICE, AND TOOL PATH GENERATION METHOD**

(30) Priority: 21.02.2019 JP 2019029786
(71) Applicant: Makino Milling Machine Co., Ltd., Tokyo 152-8578 (JP)
(72) Inventor: NAKAMOTO, Keiichi, Fuchu-shi, Tokyo 183-8538 (JP); IMOTO, Rie, Fuchu-shi, Tokyo 183-8538 (JP); TAKEI, Katsuhiko, Tokyo 152-8578 (JP); IGARI, Shinji, Aiko-gun, Kanagawa 243-0303 (JP)
(74) Representative: McWilliams, David John
(86) International application number: PCT/JP2020/003987
(87) International publication number: WO 2020/170786

(57) **Abstract**

This tool selection method is provided with: a step for respectively calculating, with respect to a plurality of known workpieces, feature amounts based on the shapes of a plurality of machining surfaces wherein, to each of the plurality of known workpieces, one main tool which is preselected from a tool list that includes a plurality of tools is allocated as being suitable for machining the plurality of machining surfaces; a step for executing, with respect to the plurality of known workpieces, machine learning by taking the feature amounts as inputs and the main tools as outputs; a
step for calculating a feature amount for a target workpiece; and a step for selecting, with respect to the target workpiece, a main tool from the tool list on the basis of a machine learning result obtained by using the feature amount of the target workpiece as an input.

## Description

### FIELD

The present disclosure relates to a tool selection method and device, as well as a tool path generation method.

### BACKGROUND

In the technical field of machine tools, various technologies for selecting the tool used for machining have been proposed. For example, in the machining-related information generation device of Patent Literature 1, the data of a machining model of a certain step is analyzed, and R dimensions of intersections of two surfaces which intersect each other are extracted. Among the extracted R dimensions, the minimum R dimension is determined, and based on the determined R dimension, the tool diameter (less than or equal to the minimum R dimension) which can be used in the step is determined. A database is searched based on the information, including the determined tool diameter, and the tools which can be used in the step are extracted.

Furthermore, in the machining information generation device of Patent Literature 2, for a workpiece having an L-shaped part or groove, an uncut amount generated in the L-shaped part or groove when a specific tool is used is obtained from a simulation using CAD data, and a mathematical model of the uncut amount is created. Machining examples having an order and constant close to the order and constant of the obtained mathematical model are searched from a machining example database. A tool close to the tool information of the searched machining example is searched from the tool database.

### [CITATION LIST]

### [PATENT LITERATURE]

[PTL 1] Japanese Unexamined Patent Publication (Kokai) No. 2002-189510
[PTL 2] Japanese Patent No. 4272206

### SUMMARY

### [TECHNICAL PROBLEM]

In the device of Patent Literature 1, the tool is selected based on the minimum R dimension among the extracted R dimensions. In this case, since the workpiece is machined with a tool having a small diameter corresponding to the minimum R dimension, the machining time may become long. Thus, for some users, the selected tool may not always meet the intent of the users (for example, short machining time, low cost, etc.). Furthermore, in the device of Patent Literature 1, it is conceivable to select a tool based on the extracted R dimension for each intersection. In this case, the number of tools may increase, whereby the tool exchange time and tool cost may increase.

Furthermore, in the device of Patent Literature 2, the tool is selected based on the uncut amount obtained from the simulation. However, there is a risk that the selected tool may not always meet the intent of the user only by considering the uncut amount. Furthermore, the algorithm used to search the machining example database is fixed, and changing the algorithm may require labor and skill.

The present invention aims to provide a tool selection method and device with which a tool can be selected in accordance with the intent of the user. The present invention further aims to provide a tool path generation method for generating the movement path of the tool selected in this manner.

### [SOLUTION TO PROBLEM]

An aspect of the present disclosure provides a tool selection method for selecting a tool to be used for machining a workpiece having a plurality of surfaces to be machined, the method comprising the steps of calculating one or a plurality of feature values for each of a plurality of known workpieces based on shapes of the plurality of surfaces to be machined, each of the plurality of known workpieces being assigned one primary tool preselected as suitable for machining the plurality of surfaces to be machined from a tool list including a plurality of tools, performing machine learning for the plurality of known workpieces using the feature values as input and the primary tool as output, calculating the feature values for a target workpiece, and selecting a primary tool for the target workpiece from the tool list based on results of the machine learning using the feature values of the target workpiece as input.

In this tool selection method, a primary tool is assigned to each of the plurality of known workpieces used for machine learning. The primary tools are preselected as suitable for machining the plurality of surfaces to be machined of each workpiece. "Suitable for machining the plurality of surfaces to be machined" can be determined by the user from various perspectives (for example, at least one of machining time, cost, and accuracy). Thus, in the tool selection method according to one aspect of the present disclosure, by performing machine learning on a plurality of known workpieces to which primary tools have been assigned from the above viewpoint by, for example, an expert of the company, the user can select the primary tool for the target workpiece in accordance with the intent of the user.

The feature values may include at least one of the areas and area ratios of the plurality of surfaces to be machined. Such feature values may include at least an area ratio represented by a ratio of the total area of the plurality of surfaces to be machined which can or cannot be machined by a certain tool in the tool list to the total area of the plurality of surfaces to be machined, and the area ratio may be calculated for all or some of the plurality of tools, and the calculated area ratios may be used as individual feature values in the machine learning. When selecting a primary tool, an expert would carefully consider for each tool the area of the workpiece which can or cannot be machined by that tool. Thus, by using the area ratio of each tool separately as input for machine learning, it is possible to execute highly-accurate machine learning.

For example, the plurality of tools may be a plurality of ball end mills having mutually-differing diameters, and the area ratio may be represented by a ratio of the total area of concave surfaces, of the plurality of surfaces to be machined, which have radii of curvature equal to or less than the radius of a certain ball end mill to the total area of the plurality of surfaces to be machined.

The tool selection method may further comprise the step of selecting a secondary tool which differs from the primary tool and which is capable of machining a portion having a minimum radius of curvature of the target workpiece, which cannot be machined with the primary tool. In this case, the workpiece can be machined with the primary tool in accordance with the intent of the user, and the part which cannot be machined with the primary tool can be machined with the secondary tool. Thus, the workpiece can be more efficiently machined.

Another aspect of the present disclosure provides a tool path generation method for generating a tool path in NC machining of a workpiece having a plurality of surfaces to be machined, the method comprising the step of generating tool paths for the primary tool and the secondary tool of the target workpiece selected by the tool selection method described above. In this tool path generation method, the workpiece can be efficiently machined in the same manner as the tool selection method described above.

Yet another aspect of the present disclosure provides a tool selection device for selecting a tool to be used for machining a workpiece having a plurality of surfaces to be machined, the device comprising a processor, and a storage device which stores a tool list including a plurality of tools, wherein the processor is configured so as to execute calculation of feature values for each of a plurality of known workpieces based on shapes of the plurality of surfaces to be machined, each of the plurality of known workpieces being assigned one primary tool preselected as suitable for machining the plurality of surfaces to be machined from the tool list, performance of machine learning for the plurality of known workpieces using the feature values as input and the primary tool as output, calculation of the feature values for a target workpiece, and selection of a primary tool for the target workpiece from the tool list based on results of the machine learning using the feature values of the target workpiece as input.

In this tool path generation device, a primary tool can be selected for the target workpiece in accordance with the intent of the user in the same manner as the tool selection method described above.

### [ADVANTAGEOUS EFFECTS OF INVENTION]

According to the aspect of the present disclosure, a tool can be selected in accordance with the intent of the user.

### BRIEF DESCRIPTION OF DRAWINGS

FIG. 1 is a schematic view showing a method and device of the present disclosure.
FIG. 2(a) is a front view showing an example of a workpiece, and FIG. 2(b) is a plan view showing an example of a workpiece.
FIG. 3 is a flowchart illustrating machine learning.
FIG. 4(a) shows a surface to be machined which can be machined with a large-diameter tool, and FIG. 4(b) shows a surface to be machined which can be machined with a small-diameter tool.
FIG. 5 is a flowchart showing selection of a tool and generation of a tool path for a target workpiece.
FIG. 6(a) shows a surface on which a tool path for a large-diameter tool is generated, and FIG. 6(b) shows a surface on which a tool path for a small-diameter tool is generated.
FIG. 7 is a schematic view showing a network structure.
FIG. 8 is a perspective view showing an example of a workpiece.
FIG. 9 is a perspective view showing an example of a workpiece.
FIG. 10 is a perspective view showing an example of a workpiece.
FIG. 11 is a perspective view showing an example of a workpiece.

### DESCRIPTION OF EMBODIMENTS

The tool selection method and device as well as the tool path generation method according to the embodiments will be described below with reference to the attached drawings. Identical or corresponding elements have been assigned the same reference sign and duplicate descriptions thereof have been omitted.

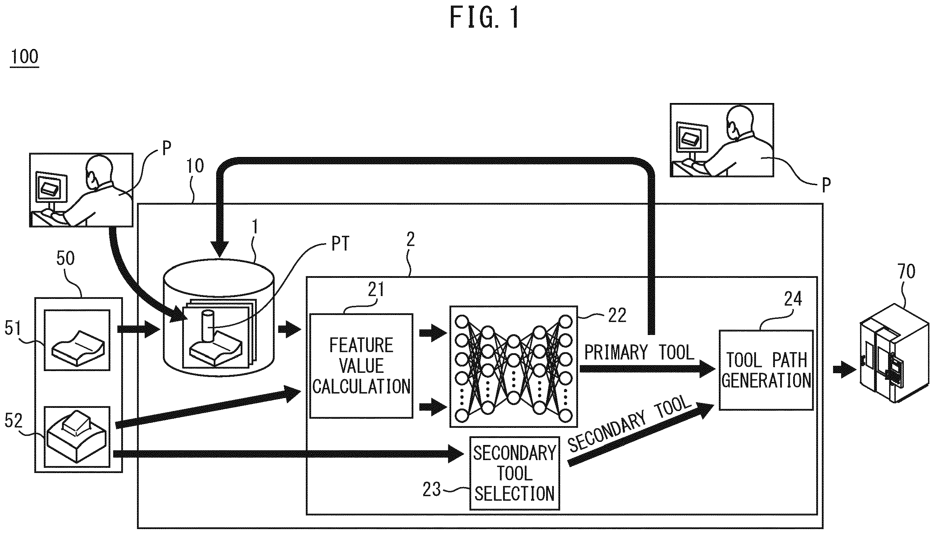

FIG. 1 is a schematic view showing a method and device of the present disclosure. The method of the present disclosure is executed in a system 100 including a CAD (computer-aided design) system 50, a device 10 for selecting a tool, and a machine tool 70. In the present embodiment, as described below, the device 10 also generates the tool path based on the selected tool. Thus, the device 10 can be referred to as a "tool selection device" as well as a "tool path generation device." The system 100 may include other constituent elements.

CAD data of a workpiece is created in the CAD system 50. The workpiece represented by the CAD data has a target shape after machining with a tool. In the CAD system 50, CAD data 51 of a "known workpiece" (hereinafter, also referred to as teacher data), which becomes the teacher data when the device 10 performs machine learning, and CAD data 52 of the "target workpiece" for which a primary tool is selected based on the results of the machine learning are created. The "known workpiece (teacher data)" may be a workpiece actually created in the past using a certain primary tool, or it may be a workpiece created only as electronic data and assigned a primary tool by an operator (for example, an expert) P.

The CAD data includes shape data such as vertices, sides, and surfaces included in the workpiece. The CAD data can be defined, for example, in the XYZ-axis coordinate system, which is a three-dimensional Cartesian coordinate system. The CAD data may be defined in other coordinate systems. A workpiece contains a plurality of surfaces to be machined enclosed (or divided) by character lines. The CAD data includes various geometric information (for example, the type of the surface to be machined (for example, planar, convex, concave, etc.), as well as the area, curvature, etc., of the surface) for each of the plurality of surfaces to be machined. The CAD data may include other geometric information.

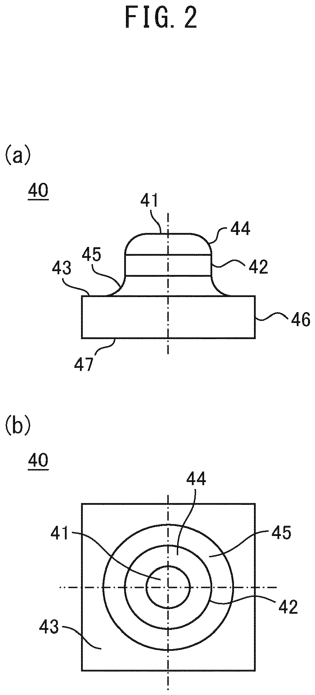

FIG. 2(a) is a front view showing an example of a workpiece, and FIG. 2(b) is a plan view showing an example of a workpiece. The workpiece 40 can be any of various objects. In the present embodiment, the workpiece 40 is a mold, and the machining target is the design surface of the mold. Specifically, among the surfaces of the workpiece 40, the design surfaces are surfaces 41, 42, 43 and corners 44, 45, and the surfaces 46, 47 are not included in the machining target. In general, the design surfaces of a mold can be represented by a plurality of faces, each of which is smoothly connected. The workpiece 40 has a simplified shape for the sake of explanation, but in the actual design surface of a mold, a high-quality and smooth surface machining is required, and thus, CAD data in which the detailed shape is not omitted is prepared. In particular, since there is a physical limit to the minimum size of the tool edge tip, the inwardly facing corners of the workpiece are not bent at right angles, but are set with corners R of a size that can be actually machined by the tool, and are represented as a shape that is smoothly connected by a curved surface. Furthermore, other than the inwardly facing corners, curved surfaces with various curvatures and curved surfaces with varying curvatures are smoothly connected to express a design shape that gives an aesthetic impression. Thus, the plurality of surfaces to be machined of the design surface of the mold may include, for example, flat surfaces, convex surfaces, and concave surfaces. "Convex surfaces" can mean convex curved surfaces having a certain radius of curvature. For example, the surface 42 is a convex curved surface in a plan view as shown in FIG. 2(b). Furthermore, the corner 44 is a convex curved surface in both the front view and the plan view, as shown in FIGS. 2(a) and (b). Thus, the surface 42 and the corner 44 are classified as "convex surfaces." "Concave surfaces" can mean concave curved surfaces having a certain radius of curvature. For example, the corner 45 is a concave curved surface in a front view as shown in FIG. 2(a). Thus, the corner 45 is classified as a "concave surface." Note that though the corner 45 is a convex curved surface in a plan view, as shown in FIG. 2(b), when a surface is a concave curved surface at any point of view, the surface can be classified as a "concave surface." In the present embodiment, a curved surface in which a positive curvature and a negative curvature coexist, as represented by a saddle-shaped curved surface having a saddle point, is classified as a "concave surface". The surfaces 41 and 43 are classified as "planar."

Returning to FIG. 1, the CAD data 51 of the known workpiece is assigned, by the operator P, one primary tool PT from the tool list including a plurality of tools that can be used by the machine tool 70. The CAD data 51 of each known workpiece and information regarding the primary tool PT (for example, tool number and/or tool diameter, etc.) are associated with each other and stored as teacher data in a storage device 1 (described in detail later) of the device 10.

The primary tool PT is assigned to the workpiece by the operator P from the tool list as being suitable for machining the plurality of surfaces to be machined included in the workpiece. When assigning the primary tool PT, the operator (in particular, the expert) P may consider that one primary tool can be selected for the workpiece, comprehensively taking into account various perspectives (for example, at least one of machining time, cost, and accuracy) based on various factors such as know-how, experience, and workplace policy. For example, the small-diameter tool can machine various shapes, but may require a long time to machine. Thus, selecting the small-diameter tool as the primary tool can lead to an increase in machining time. Furthermore, for example, some small-diameter tools can be infrequently used and expensive. Thus, the selection of such a small-diameter tool as the primary tool can lead to high cost. Considering the various features of the tool as described above, in one embodiment, the operator may focus on the machining time and select a primary tool that can prevent an increase in machining time while maintaining a certain degree of accuracy. Furthermore, in another embodiment, the operator may focus on cost and select a primary tool that can prevent high cost while maintaining a certain degree of accuracy. In yet another embodiment, the operator may focus on accuracy and select a primary tool that can realize highly-accurate machining.

The CAD data 52 of the target workpiece is input to, for example, a processor 2 (described in detail later) of the device 10. The CAD data 52 of the target workpiece may be stored in the storage device 1.

The device 10 includes the storage device 1 and the processor 2, and these constituent elements are connected to each other via buses (not illustrated) or the like. The device 10 can comprise other constituent elements such as ROM (read-only memory), RAM (random access memory), as well as an input device and/or an output device (for example, a mouse, a keyboard, a liquid crystal display, and/or a touch panel, etc.). The device 10 can be, for example, a computer, a server, a tablet, or the like.

The storage device 1 can be one or more hard disk drives or the like. The storage device 1 stores the teacher data input from the CAD system 50. Furthermore, the storage device 1 stores a tool list including a plurality of tools that can be used by the machine tool 70. The information of each tool in the tool list can include various information regarding the tool, for example, the tool number, the diameter of the tool, the material of the tool, and the price of the tool. Further, the storage device 1 can store various programs used in the processor 2. The storage device 1 may store other data.

The processor 2 can be one or a plurality of CPUs (central processing units). The processor 2 can comprise processing units configured so as to execute the processes illustrated below, and each processing unit can be executed by, for example, programs stored in the storage device 1.

The processor 2 can comprise, for example, a feature value calculation unit 21, an inference unit 22, a secondary tool selection unit 23, and a tool path generation unit 24. The processor 2 may further comprise other processing units for executing other processes. The feature value calculation unit 21 is configured so as to calculate feature values for the CAD data 51 of each set of teacher data and the CAD data 52 of the target workpiece. The inference unit 22 is configured so as to perform machine learning for the plurality of sets of teacher data. For example, a neural network can be used in the machine learning. The inference unit 22 is also configured so as to select a primary tool for the target workpiece based on the results of the machine learning regarding the target workpiece. The secondary tool selection unit 23 is configured so as to select a secondary tool for the target workpiece. The tool path generation unit 24 is configured so as to generate a tool path for each of the selected primary tool and secondary tool (the above processes will be described in detail later). Regarding the generation of the tool path, a CAM (computer-aided manufacturing) system may be used.

The tool path generated by the device 10 is converted to NC data and is input to the machine tool 70. The machine tool 70 can be any of various machine tools which perform NC machining based on NC data. The CAD system 50 and device 10 described above may be configured as separate devices, or may be combined into the same device (for example, CAD software and CAM software may be combined in the device 10).

Next, the operations executed by the device 10 will be described.

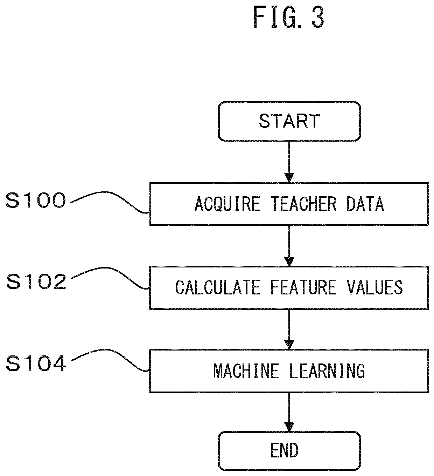

First, the machine learning executed by the device 10 will be described. FIG. 3 is a flowchart illustrating the machine learning.

The processor 2 acquires data regarding each of the plurality of sets of teacher data from the storage device 1 (step S100). The data to be acquired includes, for example, the shape data of each set of teacher data, the geometric information of each of the plurality of surfaces to be machined, and the information regarding the primary tool (for example, the diameter of the tool). Next, the processor 2 inputs the acquired data into the feature value calculation unit 21, and calculates one or a plurality of feature values for each of the plurality of sets of teacher data (step S102).

The feature values to be calculated in step S102 can be various geometric information based on the shapes of the plurality of surfaces to be machined. For example, the feature values may include at least one of the areas and area ratios of the plurality of surfaces to be machined. Specifically, the features values can include at least:
(1) a first area ratio P1ᵢ represented by the ratio of the total area of plurality of surfaces to be machined which cannot be machined by a certain tool of the tool list to the total area of the plurality of surfaces to be machined. The subscript i (i = 1, 2, 3...) indicates the tool number, and the first area ratio P1ᵢ can be calculated for all or some of the plurality of tools having mutually-different diameters in the tool list. From another point of view, the first area ratio P1ᵢ can also be referred to as the ratio of the total area of concave surfaces, of the plurality of surfaces to be machined, having a radius of curvature equal to or less than the radius of a certain tool of the tool list to the total area of the plurality of surfaces to be machined.

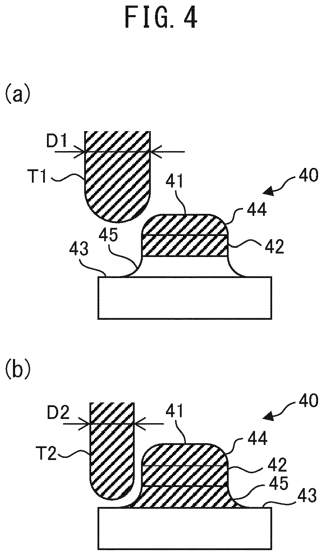

FIG. 4(a) shows a surface to be machined which can be machined with a large-diameter tool and FIG. 4(b) shows a surface to be machined which can be machined with a small-diameter tool. In the present embodiment, the tool can be, for example, ball end mill T1, T2, ...Ti (in FIGS. 4(a) and (b), only ball end mills T1 and T2 are shown). The tool may be a tool other than a ball end mill. The workpiece 40 may be the same as the workpiece 40 of FIG. 2 described above. In FIG. 4(a), the surface which can be machined by the large-diameter ball end mill T1 is hatched, and in FIG. 4(b), the surface which can be machined by the small-diameter ball end mill T2 is hatched. In the present embodiment, a concave surface having a radius of curvature equal to or less than a radius D/2 of a certain ball end mill T is set as "incapable of being machined" by the ball end mill T.

Specifically, in FIG. 4(a), among the design surfaces (surfaces 41, 42, 43 and corners 44, 45), since the radius of curvature of the corner 45 is equal to or less than the radius D1/2 of the ball end mill T1, the corner 45 cannot be machined by the ball end mill T1. Thus:
first area ratio P1₁ of workpiece 40 = (area of corner 45) / (total of areas of surfaces 41, 42, 43 and corners 44, 45)

Furthermore, in FIG. 4(b), since the radius of curvature of the corner 45 is greater than the radius D2/2 of the ball end mill T2, all of the surfaces to be machined can be machined by the ball end mill T2. Thus, the workpiece 40 does not have surfaces for which machining with the ball end mill T2 is impossible. Therefore, the first area ratio P1₂ of the workpiece 40 = 0. The first area ratio P1ᵢ is calculated for all or some of the ball end mills T1, T2, ...Ti. For example, for a ball end mill having a minimum radius D/2, or for some small diameter ball end mills, the first area ratio P1ᵢ may not be calculated as they may not be suitable as the primary tool. The calculated first area ratios P1ᵢ are used for machine learning as separate feature values.

Regarding the first area ratio P1₁ above, if there are few concave surfaces which "cannot be machined" by the ball end mill T1 (i.e., if there are many concave surfaces which "can be machined" by the ball end mill T1), from the standpoint of machining time and/or cost, it may be efficient to machine most of the workpiece 40 with the ball end mill T1 or a larger diameter ball end mill. In this case, the ball end mill T1 or a larger diameter ball end mill may be suitable as the primary tool. Conversely, if there are many concave surfaces which "cannot be machined" by the ball end mill T1 (i.e., there are few concave surfaces which "can be machined" by the ball end mill T1), from the viewpoint of machining time and/or cost, it can be inefficient to machine most of the workpiece 40 with the ball end mill T1. In this case, a ball end mill having a diameter smaller than that of the ball end mill T1 may be suitable as the primary tool. When selecting a tool, an expert can make the above judgment based on know-how and experience by observing the workpiece 40. Thus, by using the first area ratio P1₁ as input for machine learning, it is considered that the know-how and experience of an expert can be taken into consideration.

Note that in the embodiment described above, though it is set such that a concave surface having a radius of curvature which is "less than or equal to" a radius D/2 of a certain ball end mill T cannot be machined by the ball end mill T, it may be set such that a concave surface having a radius of curvature which is "less than" the radius D/2 cannot be machined. Furthermore, in the embodiment described above, though the first area ratio P1ᵢ is represented by the ratio of the areas that "cannot be machined" by a certain tool to the total area of the plurality of surfaces to be machined, the first area ratio P1ᵢ may be represented by the ratio of the areas which "can be machined" by the tool to the total area of the plurality of surfaces to be machined. As described above, the same judgment can be made in accordance with the ratio of areas which can be machined.

The feature values to be calculated in step S102 may further include other geometric information. For example, the feature values may further include:
(2) the second area ratio P2ᵢ, which is represented by the ratio of the total area of convex surfaces, of the plurality of surfaces to be machined, having a radius of curvature equal to or less than (or less than) the radius of a certain tool in the tool list to the total area of the plurality of surfaces to be machined;
(3) the total area P3 of the plurality of surfaces to be machined;
(4) the minimum radius P4 of curvature of the concave surfaces; and
(5) the minimum radius P5 of curvature of the convex surfaces.

The second area ratio P2ᵢ is calculated for all or some of the plurality of tools having mutually-different diameters in the tool list, and the values P3, P4, and P5 are each individually calculated once for a certain workpiece. When selecting a tool, it is considered that an expert can consider the feature values P2ᵢ, P3, P4, and P5 as described above. The feature values may include other geometric information based on the shapes of the plurality of surfaces to be machined other than P1ᵢ, P2ᵢ, P3, P4, and P5 described above.

Returning to FIG. 3, the processor 2 inputs information (for example, the diameter) regarding the calculated feature values of the plurality of sets of teacher data and the primary tool into the inference unit 22, and executes machine learning using the feature values as input and the information regarding the primary tool as output (step S104). As a result, the series of operations is completed. The above steps may be repeated until the desired convergent results are obtained.

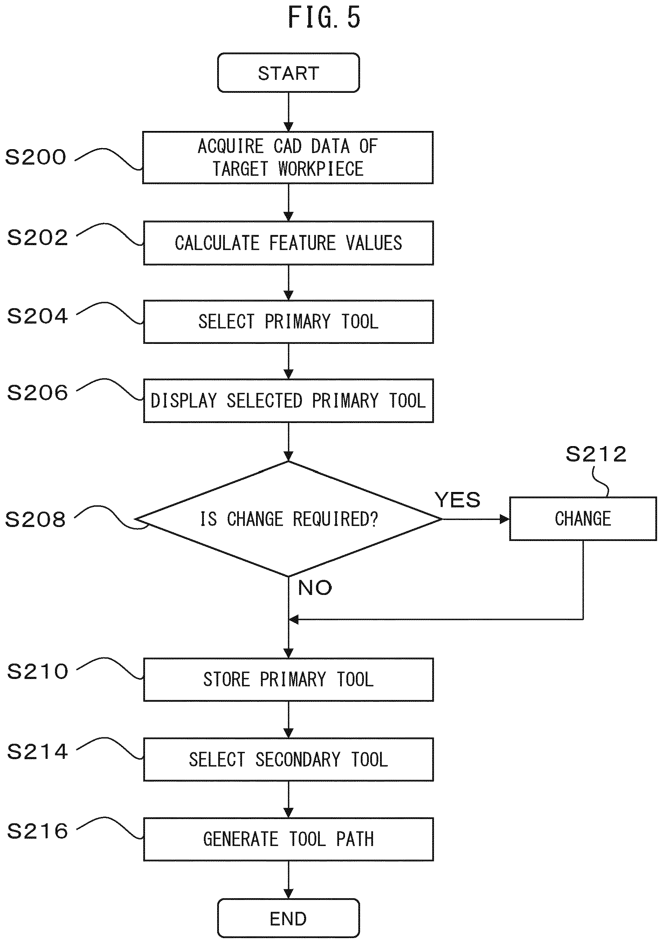

Next, the selection of a tool for a target workpiece executed by the device 10 will be described. FIG. 5 is a flowchart showing tool selection and tool path generation for a target workpiece.

The processor 2 acquires the CAD data 52 of the target workpiece created by the CAD system 50 (step S200). The acquired CAD data includes the shape data of the target workpiece and the geometric information of each of the plurality of surfaces to be machined.

Next, the processor 2 inputs the acquired CAD data 52 into the feature value calculation unit 21, and calculates the feature values for the target workpiece (step S202). The feature values to be calculated in step S202 can be the same as those calculated regarding the plurality of sets of teacher data in step S102 described above. Next, the processor 2 inputs the calculated feature values of the target workpiece into the inference unit 22, and based on the results of the machine learning described above, selects a primary tool for the target workpiece from the tool list (step S204). The processor 2 transmits the information regarding the selected primary tool (for example, the tool number and/or tool diameter, etc.) to a display unit.

Next, the display unit displays the information regarding the selected primary tool (step S206). As a result, the operator P can examine whether or not the selected primary tool is suitable for machining of the target workpiece.

Next, the processor 2 receives an input as to whether or not it is necessary to change the primary tool from the operator P (step S208). Specifically, when the operator P determines that the selected primary tool is not suitable for machining of the target workpiece, the operator P can change the primary tool by inputting a change command via the input device.

When there is an input indicating that a change is not necessary in step S208, the processor 2 stores the selected primary tool of the target workpiece in the storage device 1 along with the CAD data 52 (step S210). In machine learning to be performed subsequently, the CAD data 52 and the primary tool of the target workpiece newly stored in the storage device 1 are used as a single set of teacher data.

When there is an input indicating that a change is necessary in step S208, the processor 2 changes the primary tool based on the change command input by the operator P (step S212), and proceeds to step S210 at which the changed primary tool of the target workpiece is stored in the storage device 1 along with the CAD data 52.

Following step S210, the processor 2 inputs acquired CAD data 52 into the secondary tool selection unit 23 and selects the secondary tool for the target workpiece from the tool list (step S214). For example, the processor 2 can select, as the secondary tool, a tool which is capable of machining a portion (for example, a concave surface) of the target workpiece having a minimum radius of curvature which cannot be machined by the primary tool. Specifically, the processor 2 may select a tool having a radius smaller than the minimum radius of curvature of the target workpiece as the secondary tool. When the tool list includes a plurality of tools satisfying these conditions, the processor 2 may select, as the secondary tool, the tool having the maximum radius from among the plurality of tools satisfying the conditions. When the tool list does not include a tool which satisfies these conditions, the processor 2 displays the maximum tool radius present in the tool catalog, etc., within the range that does not exceed the minimum radius of curvature of the target workpiece on the display unit to notify the operator P, and prompts replenishment of tools having a radius smaller than the minimum radius of curvature of the target workpiece.

Next, the processor 2 inputs the selected primary tool and secondary tool to the tool path generation unit 24, and generates tool paths for the primary tool and the secondary tool of the target workpiece (step S216). For example, the processor 2 can generate tool paths using the CAM system.

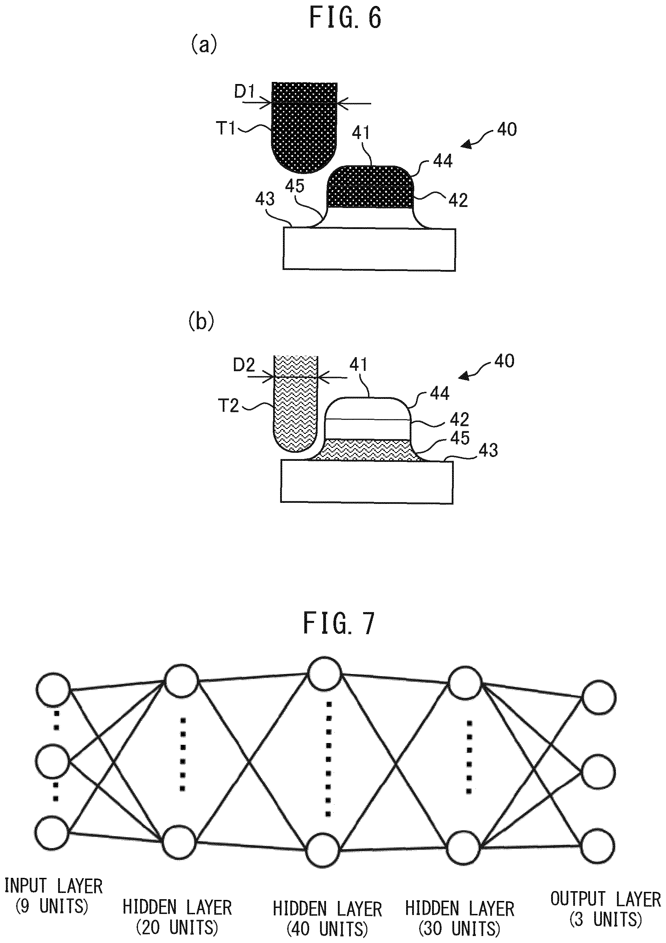

FIG. 6(a) shows a surface on which a tool path for a large-diameter tool is generated, and FIG. 6(b) shows a surface on which a tool path for a small-diameter tool is generated. The workpiece 40 and the ball end mills T1, T2 are the same as those shown in FIG. 4 described above. In the examples of FIG. 6(a) and (b), for the target workpiece 40, the large-diameter ball end mill T1 is selected as the primary tool and the small-diameter ball end mill T2 is selected as the secondary tool. In FIG. 6(a), the surface for which the tool path of the ball end mill T1 is generated is hatched, and in FIG. 6(b) the surface for which the tool path of the ball end mill T2 is generated is hatched.

Referring to FIG. 6(a), in the workpiece 40, as described above, the corner 45 cannot be machined by the ball end mill T1. Thus, a tool path for the ball end mill T1, which has been selected as the primary tool, is generated for the surfaces to be machined other than the corner 45 (i.e., surfaces 41, 42, 43 and corner 44). For example, for the surfaces 41 and 43, a profile cutting path (a path in which the tool T machines the surface to be machined so as to fill the area while following the surface to be machined) may be generated. Further, for example, a contour cutting path (a path in which the tool T machines the surface to be machined in a contour machining) may be generated for the surface 42. Further, for example, for the corner 44, a surface-following path (a path in which the tool T machines the surface to be machined by movement along the boundary line of the surface to be machined) may be generated.

Referring to FIG. 6(b), a tool path of the ball end mill T2, which has been selected as the secondary tool, is generated for the corner 45. For example, a surface-following path may be generated for the corner 45.

Returning to FIG. 5, the series of operations is thus completed. The generated tool path can be transmitted to the NC device of the machine tool 70.

In the tool selection method according to the above embodiment, a primary tool PT is assigned for each of the plurality of known workpieces used for machine learning. The primary tool PT is preselected as suitable for machining the plurality of surfaces to be machined of each workpiece. "Suitable for machining the plurality of surfaces to be machined" is determined by the user from various points of view. Thus, in this tool selection method, the user can select the primary tool PT for the target workpiece in accordance with the intent of the user, for example, by performing machine learning on a plurality of known workpieces to which the primary tools PT have been assigned by an expert of the company.

Furthermore, in the tool selection method according to the embodiment, the feature values include at least one of the areas P3 and the area ratios P1ᵢ, P2ᵢ regarding the plurality of surfaces to be machined. Specifically, the feature values include at least the first area ratio P1ᵢ represented by the ratio of the areas of the plurality of surfaces to be machined which can or cannot be machined by a certain tool in the tool list to the total area of the plurality of surfaces to be machined, the first area ratio P1ᵢ is calculated for all or some of the plurality of tools T1, T2, ...Ti, and the calculated first area ratios P1ᵢ are used for machine learning as separate feature values. When selecting a primary tool, an expert will carefully consider, for each tool Tᵢ, the area of the workpiece which can or cannot be machined by the tool Tᵢ. Thus, by using the first area ratio P1ᵢ of each tool separately as input for machine learning, highly-accurate machine learning can be executed.

In one example, the plurality of tools are the plurality of ball end mills T1, T2, ...Ti having mutually-different diameters, and the first area ratio P1ᵢ is represented by the ratio of the areas of the concave surfaces, of the plurality of surfaces to be machined, having radii of curvature equal to or less than the radius of a certain ball end mill Ti to the total area of the plurality of surfaces to be machined.

Furthermore, the tool selection method according to the embodiment further comprises a step of selecting, for the target workpiece 40, a secondary tool T2 which is different from the primary tool T1 and which can machine the part (corner) 45 of the target workpiece 40 having the minimum radius of curvature which cannot be machined by the primary tool T1. Furthermore, the tool path generation method according to the embodiment comprises a step of generating tool paths for the primary tool T1 and the secondary tool T2 of the target workpiece 40 selected by the tool selection method described above. Thus, while the workpiece 40 can be machined with the primary tool T1 in accordance with the intent of the user, the part 45 which cannot be machined with the primary tool T1 can be machined with the secondary tool T2. Thus, the workpiece 40 can be efficiently machined.

Though embodiments of the tool selection method and device as well as the tool path generation method have been described, the present invention is not limited to the embodiments described above. A person skilled in the art could understand that various changes can be made to the embodiments described above. Furthermore, a person skilled in the art could understand that it is not necessary that the method described above be executed in the order described above, and it may be executed in another order unless a contradiction is brought about thereby.

For example, in the embodiments described above, a neural network is used in the machine learning. However, in another embodiment, another method (for example, the decision tree method, etc.) may be used in the machine learning.

Furthermore, for example, in the embodiments described above, step S214, in which the secondary tool is selected, is executed after step S204, in which the primary tool is selected (refer to FIG. 5). However, step S214 may be executed before step S204.

### EXAMPLES

The primary tool was estimated using the same device as the device 10 described above. Specifically, in the present Example, a neural network was used in the machine learning, and a multi-layer perceptron (MLP) and back propagation (BP) were used. The network structure shown in FIG. 7 was used. The conditions used for the network are shown in Table 1 below. The CAD software used to create the shape data of the workpiece was NX produced by Siemens, and in the system development, the API (Application Programming Interface) of NX was used and C# was used as the programming language.

**[Table 1]**

| Activation function | Tanh (Hyperbolic tangent) |
|---|---|
| Loss function | Categorical Cross Entropy |
| Gradient descent method | Mini-batch gradient descent method |
| Optimization algorithm | Adam |
| Maximum learning repetitions | 100 |

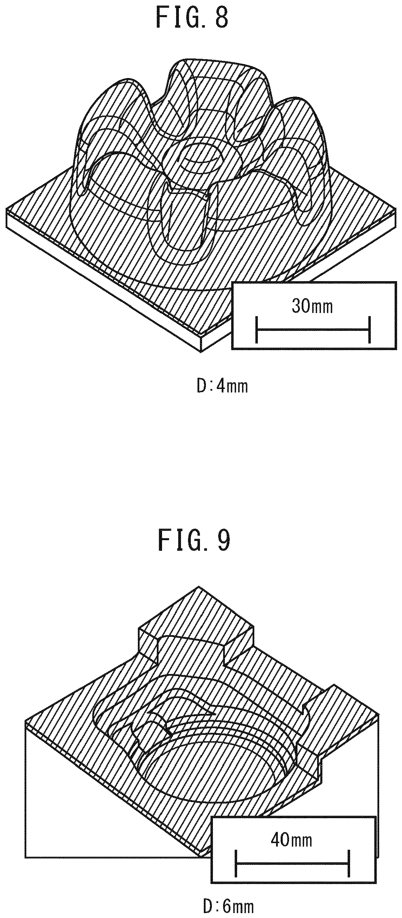

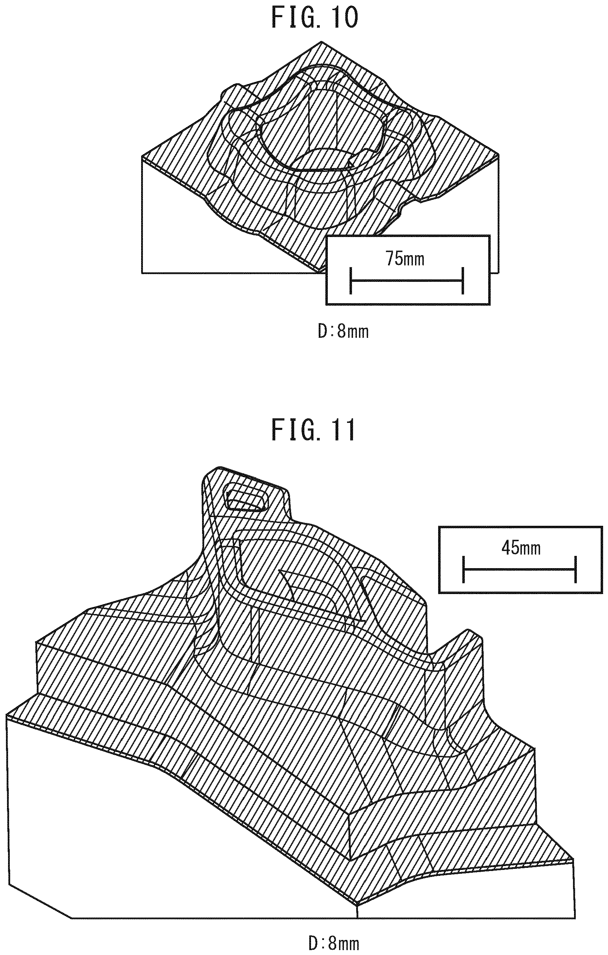

As teacher data, 34 models of past process design examples were used, including the four models shown in FIGS. 8 to 11. Each of the 34 models was assigned by an expert one of three ball end mills T1, T2, T3 having diameters D = 4 mm, 6 mm, 8 mm (radius D/2 = 2 mm, 3 mm, 4 mm), respectively (note that the tool list is assumed to include four ball end mills having diameters D = 2 mm, 4 mm, 6 mm, and 8 mm, respectively, and the ball end mill having a diameter of D = 2 mm was selected as the secondary tool).

The following nine feature values were calculated as input of the machine learning. Regarding (1) to (6), in, for example, (1), a concave surface having twice the radius of curvature of 4 mm or less (i.e., a concave surface having a radius of curvature equal to or less than the radius D/2 (2 mm) of the ball end mill T1) is represented as "D ≤ 4 mm (D / 2 ≤ 2 mm)".
(1) the ratio P1₁ of the total area of the concave surfaces of D ≤ 4 mm (D/2 ≤ 2 mm) (concave surfaces having a radius of curvature equal to or less than the radius D/2 (2 mm) of the ball end mill T1) to the total area of the plurality of surfaces to be machined;
(2) the ratio P1₂ of the total area of the concave surfaces of D ≤ 6 mm (D/2 ≤ 3 mm) (concave surfaces having a radius of curvature equal to or less than the radius D/2 (3 mm) of the ball end mill T2) to the total area of the plurality of surfaces to be machined;
(3) the ratio P1₃ of the total area of the concave surfaces of D ≤ 8 mm (D/2 ≤ 4 mm) (concave surfaces having a radius of curvature equal to or less than the radius D/2 (4 mm) of the ball end mill T3) to the total area of the plurality of surfaces to be machined;
(4) the ratio P2₁ of the total area of the convex surfaces of D ≤ 4 mm (D/2 ≤ 2 mm) (convex surfaces having a radius of curvature equal to or less than the radius D/2 (2 mm) of the ball end mill T1) to the total area of a plurality of surfaces to be machined;
(5) the ratio P2₂ of the total area of the convex surface of D ≤ 6 mm (D/2 ≤ 3 mm) (convex surfaces having a radius of curvature equal to or less than the radius D/2 (3 mm) of the ball end mill T2) to the total area of the plurality of surfaces to be machined;
(6) the ratio P2₃ of the total area of the convex surface of D ≤ 8 mm (D/2 ≤ 4 mm) (convex surfaces having a radius of curvature equal to or less than the radius D/2 (4 mm) of the ball end mill T3) to the total area of the plurality of surfaces to be machined;
(7) the total area P3 of the plurality of surfaces to be machined;
(8) the minimum radius P4 of curvature of the concave surfaces; and
(9) the minimum radius P5 of curvature of the convex surfaces.

There are three outputs, including the likelihood that the ball end mill T1 will be selected, the likelihood that the ball end mill T2 will be selected, and the likelihood that the ball end mill T3 will be selected, and the tool with the highest likelihood was selected as the primary tool.

The performance of the neural network as described above was evaluated using the Leave-One-Out method. Specifically, one of the above 34 models was used as an evaluation model, and the performance of the neural network which executed machine learning for the remaining 33 models was evaluated. This was repeated for the number of models (34 repetitions). The evaluation results are shown in Table 2 below.

**[Table 2]**

| | | Inference Results | | |
|---|---|---|---|---|
| | | D = 4mm (T1) | D = 6mm (T2) | D = 8 mm (T3) |
| Past Example Data | D = 4 mm (T1) | 8 | 0 | 0 |
| | D = 6 mm (T2) | 0 | 16 | 0 |
| | D = 8 mm (T3) | 0 | 1 | 9 |

As shown in Table 2, in many models, the inference results by the neural network and the data of past process design examples were in agreement (in 8 models, both the inference results and the past example data were D = 4 mm (T1), in 16 models, both the inference results and the past example data were D = 6 mm (T2), and in 9 models, both inference results and past example data were D = 8 mm (T3)). In only one model, the inference results (D = 6 mm (T2)) by the neural network and the past example data (D = 8 mm (T3)) were different. Thus, the correct answer rate was approximately 97.1%. From the above results, it was discovered that the above device can select the primary tool in consideration of the know-how and experience of the expert.

### REFERENCE SIGNS LIST

- 1: storage device
- 2: processor
- 10: tool selection device
- 40: workpiece
- 41, 42, 43, 44, 45: surface to be machined
- D/2: tool radius
- P1ᵢ, P2ᵢ, P3, P4, P5: feature value
- PT: primary tool
- T: tool

## Claims

1. A tool selection method for selecting a tool to be used for machining a workpiece having a plurality of surfaces to be machined, the method comprising the steps of:
calculating one or a plurality of feature values for each of a plurality of known workpieces based on shapes of the plurality of surfaces to be machined, each of the plurality of known workpieces being assigned one primary tool preselected as suitable for machining the plurality of surfaces to be machined from a tool list including a plurality of tools,
performing machine learning for the plurality of known workpieces using the feature values as input and the primary tool as output,
calculating the feature values for a target workpiece, and
selecting a primary tool for the target workpiece from the tool list based on results of the machine learning using the feature values of the target workpiece as input.

2. The tool selection method according to claim 1, wherein the feature values include at least one of the areas and area ratios of the plurality of surfaces to be machined.

3. The tool selection method according to claim 2, wherein
the feature values include at least:
an area ratio represented by a ratio of the total area of the plurality of surfaces to be machined which can or cannot be machined by a certain tool in the tool list to the total area of the plurality of surfaces to be machined, and
the area ratio is calculated for all or some of the plurality of tools, and the calculated area ratios are used as individual feature values in the machine learning.

4. The tool selection method according to claim 3, wherein
the plurality of tools are a plurality of ball end mills having mutually-differing diameters, and
the area ratio is represented by a ratio of the total area of concave surfaces, of the plurality of surfaces to be machined, which have radii of curvature equal to or less than the radius of a certain ball end mill to the total area of the plurality of surfaces to be machined.

5. The tool selection method according to claim 1, further comprising the step of selecting a secondary tool which differs from the primary tool and which is capable of machining a portion having a minimum radius of curvature of the target workpiece, which cannot be machined with the primary tool.

6. A tool path generation method for generating a tool path in NC machining of a workpiece having a plurality of surfaces to be machined, the method comprising the step of:
generating tool paths for the primary tool and the secondary tool of the target workpiece selected by the tool selection method according to claim 5.

7. A tool selection device for selecting a tool to be used for machining a workpiece having a plurality of surfaces to be machined, the device comprising:
a processor, and
a storage device which stores a tool list including a plurality of tools, wherein
the processor is configured so as to execute:
calculation of feature values for each of a plurality of known workpieces based on shapes of the plurality of surfaces to be machined, each of the plurality of known workpieces being assigned one primary tool preselected as suitable for machining the plurality of surfaces to be machined from the tool list,
performance of machine learning for the plurality of known workpieces using the feature values as input and the primary tool as output,
calculation of the feature values for a target workpiece, and
selection of a primary tool for the target workpiece from the tool list based on results of the machine learning using the feature values of the target workpiece as input.
